(19) Europäisches Patentamt

European Patent Office

Office européen des brevets

(11) **EP 1 043 830 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(51) Int Cl.⁷: **H02K 41/03**

(21) Anmeldenummer: **00105542.5**

(22) Anmeldetag: **16.03.2000**

(54) **Synchron-Linearmotor**

Synchronous linear motor

Moteur lineaire synchrone

(84) Benannte Vertragsstaaten:
**AT BE CH CY DE DK ES FI FR GB GR IE IT LI LU MC NL PT SE**

(30) Priorität: **09.04.1999 DE 19915945**

(43) Veröffentlichungstag der Anmeldung:
**11.10.2000 Patentblatt 2000/41**

(73) Patentinhaber: **Sew-Eurodrive GmbH & Co. KG
76646 Bruchsal (DE)**

(72) Erfinder: **Nestler, Helmut
76646 Bruchsal (DE)**

(56) Entgegenhaltungen:
**EP-A- 0 454 183        DE-A- 3 425 266
DE-C- 19 528 043        US-A- 5 214 323**

- **PATENT ABSTRACTS OF JAPAN vol. 1997, no. 06, 30. Juni 1997 (1997-06-30) & JP 09 047009 A (HITACHI LTD), 14. Februar 1997 (1997-02-14)**
- **PATENT ABSTRACTS OF JAPAN vol. 1999, no. 12, 29. Oktober 1999 (1999-10-29) & JP 11 206100 A (YASKAWA ELECTRIC CORP), 30. Juli 1999 (1999-07-30)**

**Beschreibung**

Die Erfindung betrifft einen Synchron-Linearmotor.

Aus der DE 195 28 043 ist ein Synchron-Linearmotor mit einem Primärteil und einem Sekundärteil bekannt, wobei das Primärteil Nuten mit einer ein- oder mehrphasigen Wicklung aufweist und das Sekundärteil eine Folge von Permanentmagneten mit jeweils als Nord- und Südpol wirkenden Polpaaren umfasst.

Dabei umfasst das Primärteil ein Blechpaket, das aus dünnen gestanzten Blechen besteht. Die Dicke der Bleche wird hauptsächlich durch die maximal tolerierten Wirbelströme bestimmt. Die Form der Bleche wird durch FEM-Programme optimiert. Im Wesentlichen weisen die Bleche Nuten auf, die die Spulenwicklungen des Primärteils aufnehmen können.

Das Sekundärteil weist Magnete auf, die in Motorlängsachsenrichtung angeordnet sind und in abwechselnder Reihenfolge magnetische Nord- und Südpole aufweisen.

Im Gegensatz zu rotatorischen Synchronmotoren, die sich über den Umfang betrachtet, endlos fortsetzen, weist ein Synchron-Linearmotor als besonderes Merkmal einen Anfang und ein Ende auf. An den Übergängen am Anfang und am Ende entstehen bei einem Synchron-Linearmotor periodische Motorendkräfte in Bewegungsrichtung, die sich auf die Bewegung des Linearmotors störend auswirken. Diese Motorendkräfte entstehen deshalb, weil der Linearmotor je nach Motorstellung die magnetischen Pole unterschiedlich überdeckt. Dabei gibt es Vorzugslagen, in denen die gespeicherte magnetische Energie des Linearmotors besonders groß ist. Es bedarf dann eines zusätzlichen Kraftaufwandes, um den Linearmotor aus solchen Vorzugslagen herauszubewegen. Die Kraft, mit der sich der Linearmotor in die Vorzugslagen der magnetischen Pole zieht, wird als 'Polkraft' bezeichnet. Sie beträgt oft bis zu einem Viertel der Motor-Nennkraft. Über jedem Magnetpol befindet sich eine Vorzugslage. Die Polkraft verläuft daher periodisch zu den Magnetpolen, was zu einer als 'Polwelligkeit' bezeichneten Störung der Motorkraft führt.

Da die Polkraft nicht vom Motorstrom abhängig ist, stellt sie eine passive Kraft dar, die auch im stromlosen Zustand vorhanden ist. Die Polkraft verrichtet keine Arbeit, da sie abwechselnd in Bewegungsrichtung und entgegen der Bewegungsrichtung des Linearmotors wirkt. Im Betrieb ergibt sich die gesamte Kraft aus der Polkraft, der Nutkraft und der durch den Motorstrom erzeugten Kraft. Die Ursache der Nutkraft beruht dabei auf der Wechselwirkung zwischen Magnetpolkanten und Primärteilnuten. Dies bedingt einen periodischen Verlauf über eine Nutteilung, weshalb dieser Verlauf auch als 'Nutwelligkeit' bezeichnet wird. Da die gesamte Kraft Polkraft und Nutkraft umfasst, umfasst die Welligkeit der Kraft daher auch die 'Nutwelligkeit' und die 'Polwelligkeit'.

Die Welligkeit der Kraft führt zu einer Bewegungsungenauigkeit der herkömmlichen Synchron-Linearmotoren, was besonders bei Verwendung solcher Motoren als Präzisionssteller unerwünscht ist.

Zur Verminderung der Kraftwelligkeiten wird in der DE 195 28 043 vorgeschlagen, am vorderen und hinteren Stirnbereich des Primärteils mit dem Winkel β abgeschrägte Flächen anzubringen. Die Fertigung dieser abgeschrägten Flächen ist jedoch aufwendig und kompliziert. Zum Aufbau des Blechpakets ist eine der Paketbreite entsprechend große Anzahl unterschiedlich gestanzter Einzelbleche notwendig, was keine einfache und kostengünstige Fertigung zulässt.

Aus der DE 195 28 043 ist ein Schrittmotor bekannt, der an seinem vorderen und hinteren Ende erregungswicklungslose Polschuhe aufweist und ebenfalls wesentliche Kraftwelligkeiten der geschilderten Art aufweist.

Aus der DE 3425266 ist ein Linear motor bekannt, der ein Primärteil aufweist, dessen vor derer und hinterer Stirnbereich mit teilweise unbewickelten Nuten versehen ist.

Der Erfindung liegt die Aufgabe zugrunde, unter Vermeidung der vorgenannten Nachteile einen Synchron-Linearmotor weiterzubilden. Insbesondere soll dieser verminderte Kraftwelligkeiten aufweisen, die Bewegungsgenauigkeit verbessern und in einfacher und kostengünstiger Weise zu fertigen sein.

Erfindungsgemäß wird die Aufgabe bei einem Synchron-Linearmotor gelöst nach den in Anspruch 1 angegebenen Merkmalen. Ein wesentliches Merkmal der Erfindung ist, dass das Blechpaket im Primärteil in mindestens zwei Teilpakete aufteilbar ist, welche in Stufen angeordnet sind. Die Teilpakete sind im Wesentlichen senkrecht zur Normalen der Luftspaltfläche einerseits und senkrecht zur Motorlängsachsenrichtung andererseits in Stufen angeordnet, wobei die Anzahl der Teilpakete $N_T$ ist. Besonders vorteilhaft ist dabei, dass gleiche Einzelbleche ein Paket bilden, das in zwei Teilpakete aufteilbar ist. Bei gleicher Gestaltung der Einzelbleche ist die Fertigung derselben besonders einfach und kostengünstig. Insbesondere ist auch die Montage einfach, schnell und übersichtlich durchführbar. Im vorderen und hinteren Stimbereich des Primärteils befinden sich unbewickelte Nuten, wobei die Teilpakete jeweils versetzt stufenförmig angeordnet sind. Das Magnetfeld bildet sich dann derart aus, dass bei Abweichungen von den Vorzugslagen die Welligkeit der Kraft vermindert wird.

Bei einer weiteren vorteilhaften Ausgestaltung sind die Teilpakete um jeweils eine Nutteilung $\tau_N$ versetzt. Das Magnetfeld bildet sich dann vorteilhafterweise derart aus, dass bei Abweichungen von den Vorzugslagen die störende Polkraft bzw. die Polwelligkeit nahezu ausgelöscht oder wenigstens deutlich vermindert wird.

Bei einer weiteren vorteilhaften Ausgestaltung weist jedes Teilpaket mindestens eine unbewickelte Nut auf, wobei die Anzahl der unbewickelten Nuten des jeweiligen Teilpakets im vorderen und hinteren Stimbereich $N_F$ ist. Von Vorteil ist dabei, dass die Magnetfeldlinien und die somit erzeugte Kraftwirkung sich derart ausbilden, dass die Kraftwelligkeit vermindert ist und somit die Bewegungsgenauigkeit des Synchronmotors verbessert ist.

Bei einer weiteren vorteilhaften Ausgestaltung beträgt die Anzahl der unbewickelten Nuten des jeweiligen Teilpakets im vorderen und hinteren Stimbereich $N_F = N_T-1$, wobei $N_T$ die Anzahl der Teilpakete ist. Von Vorteil ist dabei, dass der Aufbau des Blechpakets symmetrisch ausführbar ist, sich die Felder daher vorne und hinten in entsprechender Weise ausbilden und daher in Vorwärts- und Rückwärtsrichtung das gleiche Fahrverhalten und die gleiche Positioniergenauigkeit erreichbar ist.

Bei einer weiteren vorteilhaften Ausgestaltung weist in der Anordnung ansteigender Stufen ein jeweils aufeinander folgendes Teilpaket mindestens eine unbewickelte Nut mehr auf als das vorhergehende Teilpaket. Dadurch entsteht am vorderen Stimbereich eine gleichmäßig aufsteigende Treppe, wie ebenso in analoger Art und Weise am hinteren Stimbereich. Von Vorteil ist dabei, dass der Motor symmetrisch ausführbar wird und daher auch ein gegenüber Vorwärts- und Rückwärtsfahren symmetrisches Verhalten aufweist, insbesondere eine Positioniergenauigkeit gleicher Güte.

Bei einer weiteren vorteilhaften Ausgestaltung weisen die einzelnen Einzelbleche jeweils die gleiche Länge oder Form auf. Von Vorteil ist dabei, dass die Fertigung gleicher Teile kostengünstig ist und die Lagerhaltung und Fertigung einfacher ist im Gegensatz zur Lagerhaltung bei Verwendung vieler verschiedener Teile.

Bei einer weiteren vorteilhaften Ausgestaltung sind die Magnete in der Luftspaltfläche schräg orientierbar gegenüber der Motorlängsachsenrichtung, und die Magnetschrägung γ ist von

Null verschieden wählbar, wobei $\gamma = \dfrac{\alpha}{\tau_N}$ ist und α der Versatz der Magnete in

Motorlängsachsenrichtung und $\tau_N$ die Nutteilung ist. Von Vorteil ist dabei, dass die Schrägung eine zusätzliche Verminderung der Welligkeit der Kraft ermöglicht.

Bei einer vorteilhaften Ausgestaltung erfüllen die Polteilung $\tau_P$, die Nutteilung $\tau_N$, die Magnetschrägung γ und die Anzahl der unbewickelten Nuten $N_F$ die Bedingung: $(N_F + \gamma)\tau_N = \tau_P - \tau_N + g\tau_P$, wobei $g$ eine beliebige ganze Zahl ist. Von Vorteil ist dabei, dass die Polkraft oder Polwelligkeit sehr klein wird. Bei Einschränkung des Motors auf zwei Dimensionen verschwindet die Polkraft sogar exakt. Im realen dreidimensionalen Fall ergeben sich jedoch kleine Abweichungen von diesem idealen Fall.

**Bezugszeichenliste**

1 Nuten (beispielhaft) mit senkrechter Nutrichtung
2 Permanentmagnete
3 Läufer, Primärteil
4 Motorlängsachsenrichtung
5 vorderer Stimbereich
6 hinterer Stimbereich
11 Teilpaket
12 Teilpaket
13 Teilpaket
30 Einzelblech
31 Nut
32 Zahn
33 Zahnkopf
34 unbewickelte Nuten
ε Schrägungswinkel

Die Erfindung wird nun anhand von Abbildungen und Ausführungsbeispielen näher erläutert:

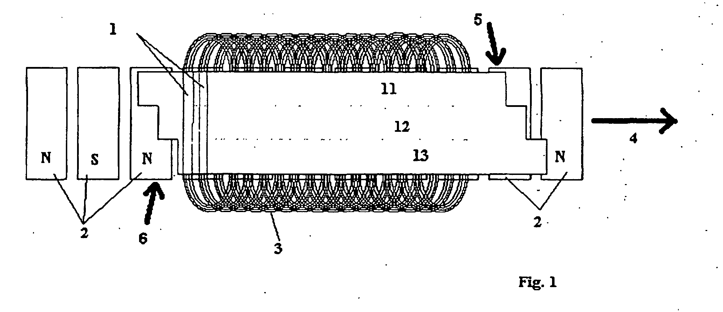

In der Figur 1 ist eine schematische Draufsicht auf einen erfindungsgemäßen Synchron-Linearmotor gezeigt. Der Synchron-Linearmotor umfasst ein Primärteil als Läufer 3 und ein die Permanentmagnete 2 umfassendes Sekundärteil.
Dabei umfasst das Primärteil ein aus den Teilpaketen 11, 12, 13 zusammengesetztes Blechpaket. Zwischen dem in der Draufsicht näher oder oben liegenden Primärteil und dem Sekundärteil ist ein Luft-Abstand ausgebildet. Dieser Luft-Abstand definiert eine Fläche, deren Normale in der Richtung der Draufsicht und senkrecht zur Motorlängsachsenrichtung 4 orientiert ist.
In der Figur 1 sind mit 1 bezeichnete Nuten angedeutet, deren Nutrichtung senkrecht zur Motorlängsachsenrichtung einerseits und senkrecht zur Normalen der Luftspaltfläche andererseits ausgerichtet ist.
In einem weiteren erfindungsgemäßen Ausführungsbeispiel sind auch Nutrichtungen ausbildbar, die senkrecht zur Normalen der Luftspaltfläche ausgerichtet sind, aber nicht senkrecht zur Motorlängsachsenrichtung.

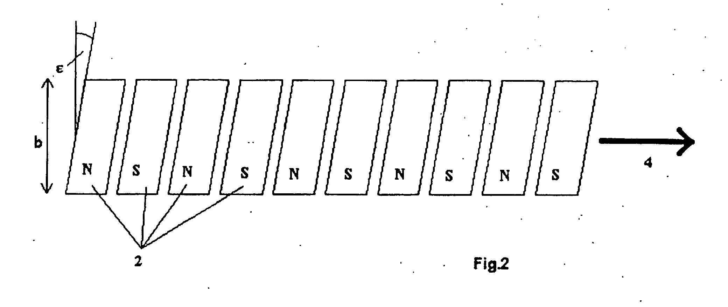

In der Figur 2 ist das Sekundärteil eines weiteren erfindungsgemäßen Ausführungsbeispiels gezeigt. Es weist eine schräge Orientierung der Permanentmagnete mit einem Schrägungswinkel ε gegenüber der Richtung des Kreuzproduktvektors aus Draufsichtrichtung einerseits und Motorlängsachsenrichtung 4 andererseits auf. Die Schrägung vermindert die Welligkeit der Kraft.

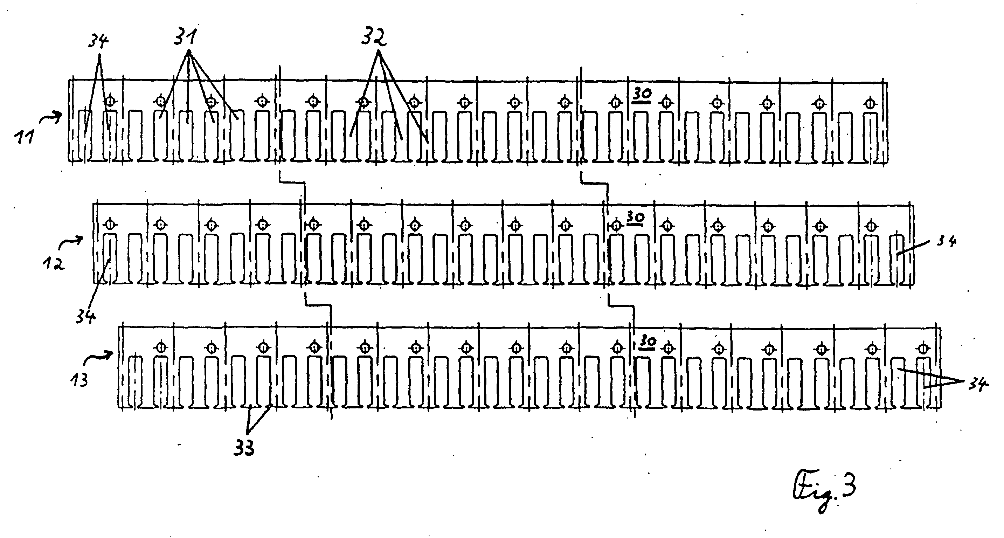

In der Figur 3 sind drei gestanzte Einzelbleche 30 gezeigt. Sie weisen Nuten 31 zwischen den Zähnen 32 auf. Die Zähne ihrerseits weisen verbreiterte platte Zahnköpfe 33 auf. Hinter jedem gezeigten Einzelblech 30 befinden sich weitere identische Einzelbleche, die zusammen ein Teilpaket (11, 12, 13 in Figur 1) bilden.

Um Wirbelstromverluste zu reduzieren, haben die Einzelbleche jeweils eine Dicke im Millimeterbereich oder Bruchteilen hiervon. Die drei Einzelbleche 30 der Figur 3 bzw. die drei Teilpakete 11, 12, 13 werden um eine Nutteilung versetzt übereinander gestapelt. Die Versetzung um eine Nutteilung ist in der Figur 3 mit zwei teilweise gestrichelten Linien angedeutet. Das derart zusammengesetzte Blechpaket (11, 12, 13) ist in einer anderen Aufsicht in der Figur 1 gezeigt. Die Nuten werden mit Wicklungen, wie in der Figur 1 angedeutet, versehen.

Die mit 34 bezeichneten Nuten bleiben unbewickelt. Somit hat jedes versetzte Teilpaket am vorderen Stimbereich eine unbewickelte Nut mehr als das vorhergehende. Entsprechendes gilt am hinteren Stimbereich. Daher bildet sich ein Feldlinienverlauf aus, der eine verminderte Polkraft bewirkt.

Bei einem weiteren erfindungsgemäßen Ausführungsbeispiel kann auch eine andere Anzahl von Teilpaketen verwendet werden. Beispielsweise ist auch eine Aufteilung in zwei, vier oder mehr Teilpakte ausführbar.

Im allgemeinen gilt jedoch $N_P = 2mpq + N_F$. Dabei ist $m$ die Phasenzahl, $p$ die Polpaarzahl, $q$ die Lochzahl pro Pol und Strang, und $N_F$ die Anzahl freier Nuten je Teilpaket bzw. im vorderen oder hinteren Stimbereich. Die Anzahl der Teilpakete $N_T$ und die Anzahl der unbewickelten Nuten $N_F$ auf jeder Seite des Primärteils, also dem vorderen oder hinteren Stirnbereich, stehen im Zusammenhang über $N_F = N_T - 1$.

In der Figur 2 sind die Magnete schräg angeordnet. Die Magnetschrägung $\gamma$ ist ein Maß für diese Schrägung und beträgt $\gamma = \frac{\alpha}{\tau_N}$, wobei $\alpha$ der Versatz der Magnete in Motorlängsachsenrichtung ist und $\tau_N$ die Nutteilung ist. Die Magnetschrägung beträgt 0 im Fall von Magneten ohne Schrägung gemäß Figur 1.

Wenn ganz allgemein $(N_F + \gamma)\tau_N = \tau_P - \tau_N + g\tau_P$ gilt, ist die Kraftwelligkeit stark vermindert. Dabei ist $g$ eine ganze Zahl und beispielsweise $\gamma = \pm 1$ bei Magnetschrägung um eine Nutteilung in bzw. entgegen der Motorlängsachsenrichtung. Eine weitere Minimierung der verbleibenden Kraftwelligkeit lässt sich bei einem weiteren erfindungsgemäßen Ausführungsbeispiel durch geeignete Wahl der Polbedeckung erreichen.

Bekanntlich gilt $\tau_P = mq\tau_N$ für Mehrphasen-Maschinen. Insbesondere ist für Drehstrom $m = 3$. Daher läßt sich obige Gleichung auch als $N_F + \gamma = (1 + g) mq$-1 schreiben.

Ein besonderer Vorteil kann jedoch im Rahmen der Erfindung erzielt werden, wenn $q = 1$ gewählt wird. In diesem Fall kann nämlich der Fertigungsaufwand für das Primärteil besonders vermindert werden. Die Zahl der unbewickelten Nuten $N_F$ ist dann 2 für $\gamma = 0$, 3 für $\gamma = -1$ und 4 für $\gamma = 1$.

Bei einem Ausführungsbeispiel mit $g = 0$ ist vorteilhaft, dass eine kleine Länge erreicht werden kann. Bei einem weiteren Ausführungsbeispiel mit der Wahl $g = 1$ ist die Nutkraftwelligkeit stark verminderbar.

Im Rahmen der Erfindung sind also bei konstanter Breite b des Primärteils durch Aufteilung in eine verschiedene Anzahl von Teilpaketen und verschieden starke Zunahme der unbewickelten Nuten 34 von einem Teilpaket zum nächsten, also beispielsweise 11 zu 12, verschieden stark ansteigende 'Treppen' 11, 12, 13 ausführbar.

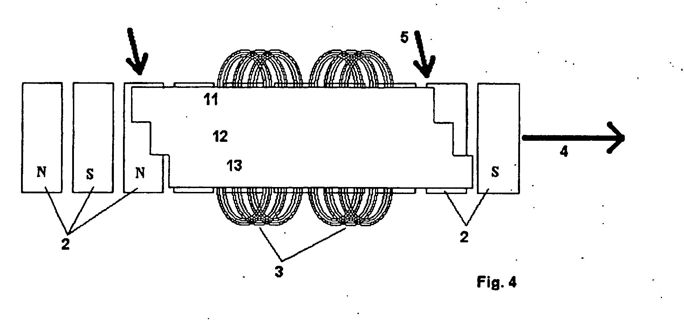

In der Figur 4 ist für die Polpaarzahl 2 eine weitere erfindungsgemäße Ausführungsform gezeigt. Sie weist im Gegensatz zu der in Figur 1 gezeigten erfindungsgemäßen Ausführungsform zwar mehr Wechselfeldanteil auf, der größere Verluste und bei vergleichbarem Motor ein schwächeres Wanderfeld bedingt; ein Vorteil dieser Ausführungsform liegt aber im geringeren Fertigungs- und Montageaufwand, da die Wicklungen einfacher ausführbar sind. Dadurch sinken die Fertigungs- und auch Wartungsoder Repararturkosten.

In weiteren erfindungsgemäßen Ausführungsformen können im Rahmen der Erfindung dem Fachmann geläufige Optimierungen unter Berücksichtigung der Maximalgeschwindigkeit des Linearmotors vorgenommen werden, wie geometrische Änderung der Form des Zahnkopfes 33, Dimensionierung der Nuten 34, Festlegung des Luftspaltes, Materialwahl, Dicke der Einzelbleche, geometrische Form der Magnete, insbesondere die Breite, oder dergleichen. Besonders effektiv sind dabei auch Rundungen und/oder Abschrägungen von Kanten, Ecken oder dergleichen.

**Patentansprüche**

1.  Synchron-Linearmotor mit einem Primärteil (3) und einem Sekundärteil, wobei das Primärteil (3) Nuten (1,31) mit einer ein- oder mehrphasigen Wicklung aufweist und das Sekundärteil eine Folge von Permanentmagneten 2 mit jeweils als Nord- und Südpol wirkenden Polpaaren umfasst,
    und wobei das Primärteil (3) ein Blechpaket umfasst,
    **dadurch gekennzeichnet, dass**
    die vorderen und die hinteren Stimbereiche (5,6) des Primärteils (3) mindestens teilweise mit unbewickelten Nuten (34) versehen sind,
    wobei das Blechpaket im Primärteil (3) in mindestens zwei Teilpakete (11,12,13) aufteilbar ist, welche in Stufen angeordnet sind.

2.  Synchron-Linearmotor nach Anspruch 1,
    **dadurch gekennzeichnet, dass**
    die Permanentmagnete (2) jeweils im Abstand der Polteilung $\tau_P$ zueinander angeordnet sind und die Nuten (1,31) im Abstand der Nutteilung $\tau_N$ zueinander angeordnet sind.

3.  Synchron-Linearmotor nach mindestens einem der vorangegangenen Ansprüche,
    **dadurch gekennzeichnet, dass**

die Länge des Sekundärteils in Bewegungsrichtung größer ist als die Länge des Primärteils (3).

**4.** Synchron-Linearmotor nach mindestens einem der vorangegangenen Ansprüche,
**dadurch gekennzeichnet, dass**
die Teilpakete (11,12,13) im Wesentlichen senkrecht zur Normalen der Luftspaltfläche einerseits und senkrecht zur Motorlängsachsenrichtung andererseits in Stufen angeordnet sind, und wobei die Anzahl der Teilpakete $N_T$ ist.

**5.** Synchron-Linearmotor nach mindestens einem der vorangegangenen Ansprüche,
**dadurch gekennzeichnet, dass**
die einzelnen Einzelbleche (30) jeweils die gleiche Länge aufweisen.

**6.** Synchron-Linearmotor nach mindestens einem der vorangegangenen Ansprüche,
**dadurch gekennzeichnet, dass**
die einzelnen Einzelbleche (30) jeweils die gleiche Form aufweisen.

**7.** Synchron-Linearmotor nach mindestens einem der vorangegangenen Ansprüche,
**dadurch gekennzeichnet, dass**
jedes Teilpaket (11,12,13) mindestens eine unbewickelte Nut (34) aufweist, wobei die Anzahl der unbewickelten Nuten (34) des jeweiligen Teilpakets im vorderen und hinteren Stirnbereich $N_F$ ist.

**8.** Synchron-Linearmotor nach mindestens einem der vorangegangenen Ansprüche,
**dadurch gekennzeichnet, dass**
die Anzahl der unbewickelten Nuten (34) des jeweiligen Teilpakets (11,12,13) im vorderen und hinteren Stimbereich $N_F = N_T - 1$ beträgt, wobei $N_T$ die Anzahl der Teilpakete (11,12,13) ist.

**9.** Synchron-Linearmotor nach mindestens einem der vorangegangenen Ansprüche,
**dadurch gekennzeichnet, dass**
in der Anordnung ansteigender Stufen ein jeweils aufeinander folgendes Teilpaket (11,12,13) mindestens eine unbewickelte Nut (34) mehr aufweist als das vorhergehende Teilpaket (11,12,13).

**10.** Synchron-Linearmotor nach mindestens einem der vorangegangenen Ansprüche,
**dadurch gekennzeichnet, dass**
die Teilpakete (11,12,13) um jeweils eine Nutteilung $\tau_N$ versetzt sind.

**11.** Synchron-Linearmotor nach mindestens einem der vorangegangenen Ansprüche,
**dadurch gekennzeichnet, dass**
die Magnete parallel zur Luftspaltfläche schräg orientierbar sind gegenüber der Motorlängsachsenrichtung, und dass die Magnetschrägung $\gamma$ von Null verschieden wählbar ist, wobei $\gamma = \dfrac{\alpha}{\tau_N}$ ist und $\alpha$ der Versatz der Magnete in Motorlängsachsenrichtung.

**12.** Synchron-Linearmotor nach mindestens einem der vorangegangenen Ansprüche,
**dadurch gekennzeichnet, dass**
die Polteilung $\tau_P$, die Nutteilung $\tau_N$, die Magnetschrägung $\gamma$ und die Anzahl der unbewickelten Nuten $N_F$ die Bedingung: $(N_F + \gamma)\tau_N = \tau_P - \tau_N + g\tau_P$ erfüllen, wobei $g$ eine beliebige ganze Zahl ist.

**13.** Synchron-Linearmotor nach mindestens einem der vorangegangenen Ansprüche,
**dadurch gekennzeichnet, dass**
die Nutrichtung senkrecht zur Motorlängsachsenrichtung einerseits und senkrecht zur Normalen der Luftspaltfläche andererseits ausgerichtet ist.

**14.** Synchron-Linearmotor nach mindestens einem der Ansprüche 1 bis 12,
**dadurch gekennzeichnet, dass**
die Nutrichtung senkrecht zur Normalen der Luftspaltfläche ausgerichtet ist, wobei die Nutrichtung zur Motorlängsachsenrichtung mit beliebigem Winkel wählbar ist und parallel zur Luftspaltfläche wählbar ist.

**Claims**

**1.** A synchronous linear motor with a primary part (3) and a secondary part, wherein the primary part (3) has slots (1, 31) with a single- or multiple-phase winding and the secondary part comprises a succession of permanent magnets 2 with pairs of poles acting as a north pole and a south pole in each case, and wherein the primary part (3) comprises a stack of sheets, **characterized in that** the front and the rear end-face regions (5, 6) of the primary part (3) are provided at least in part with non-wound slots (34), wherein the stack of sheets in the primary part (3) is capable of being divided into at least two partial stacks (11, 12, 13) which are arranged in steps.

**2.** A synchronous linear motor according to Claim 1, **characterized in that** the permanent magnets (2) are arranged in each case at the interval of the pole pitch $\tau_P$ with respect to one another and the slots (1, 31) are arranged at the interval of the slot pitch $\tau_N$ with respect to one another.

**3.** A synchronous linear motor according to at least one of the preceding Claims, **characterized in that** the length of the secondary part in the direction of movement is greater than the length of the primary part (3).

**4.** A synchronous linear motor according to at least one of the preceding Claims, **characterized in that** the partial stacks (11, 12, 13) are arranged in steps substantially at right angles to the normal line of the air-gap face on the one hand and at right angles to the direction of the longitudinal axis of the motor on the other hand, wherein the number of the partial stacks is $N_T$.

**5.** A synchronous linear motor according to at least one of the preceding Claims, **characterized in that** the individual sheets (30) have the same length in each case.

**6.** A synchronous linear motor according to at least one of the preceding Claims, **characterized in that** the individual sheets (30) have the same shape in each case.

**7.** A synchronous linear motor according to at least one of the preceding Claims, **characterized in that** each partial stack (11, 12, 13) has at least one non-wound slot (34), wherein the number of the non-wound slots (34) of the respective partial stack in the front and rear end-face region is $N_F$.

**8.** A synchronous linear motor according to at least one of the preceding Claims, **characterized in that** the number of the non-wound slots (34) of the respective partial stack (11, 12, 13) in the front and rear end-face region amounts to $N_F = N_T - 1$, wherein $N_T$ is the number of the partial stacks (11, 12, 13).

**9.** A synchronous linear motor according to at least one of the preceding Claims, **characterized in that** in the arrangement of ascending steps a partial stack (11, 12, 13) following in succession in each case has at least one more non-wound slot (34) than the preceding partial stack (11, 12, 13).

**10.** Asynchronous linear motor according to at least one of the preceding Claims, **characterized in that** the partial stacks (11, 12, 13) are offset by one slot pitch $\tau_N$ in each case.

**11.** A synchronous linear motor according to at least one of the preceding Claims, **characterized in that** the magnets are capable of being orientated parallel to the air-gap face and obliquely to the direction of the longitudinal axis of the motor, and the magnet inclination $\gamma$ is capable of being selected to be different from zero, wherein $\gamma = \dfrac{\alpha}{\tau_N}$ and $\alpha$ is the off-set of the magnets in the direction of the longitudinal axis of the motor.

**12.** A synchronous linear motor according to at least one of the preceding Claims, **characterized in that** the pole pitch $\tau_P$, the slot pitch $\tau_N$, the magnet inclination $\gamma$ and.the number of the non-wound slots $N_F$ meet the condition $(N_F + \gamma)\tau_N = \tau_P - \tau_N + g\tau_P$, in which **g** is a random whole number.

**13.** A synchronous linear motor according to at least one of the preceding Claims, **characterized in that** the slot direction is orientated at a right angle to the direction of the longitudinal axis of the motor on the one hand and at a right angle to the normal line of the air-gap face on the other hand.

**14.** A synchronous linear motor according to at least one of Claims 1 to 12, **characterized in that** the slot direction is orientated at a right angle to the normal line of the air-gap face, wherein the slot direction is capable of being selected to be at any angle with respect to the direction of the longitudinal axis of the motor and is capable of being selected to be parallel to the air-gap face.

**Revendications**

**1.** Moteur linéaire synchrone comportant une partie primaire (3) et une partie secondaire, dans lequel la partie primaire (3) présente des encoches (1, 31) munies d'un enroulement mono- ou polyphasé et la partie secondaire comprend une succession d'aimants permanents (2) avec des paires de pôles fonctionnant respectivement comme pôle nord et pôle sud, et dans lequel la partie primaire (3) comprend un empilage de tôles,
**caractérisé par le fait que**
les extrémités avant et arrière (5, 6) de la partie primaire (3) sont au moins partiellement munies d'encoches non bobinées (34),
l'empilage de tôles de la partie primaire (3) étant séparable en au moins deux sous-empilages (11, 12, 13) qui sont disposés en gradins.

**2.** Moteur linéaire synchrone selon la revendication 1,
**caractérisé par le fait que**
les aimants permanents (2) sont espacés chaque fois du pas polaire $\tau_P$ et les encoches (1, 31) sont espacées chaque fois du pas d'encoches $\tau_N$.

**3.** Moteur linéaire synchrone selon au moins une des revendications précédentes,
**caractérisé par le fait que**
la longueur de la partie secondaire dans la direction de déplacement est supérieure à la longueur de la partie primaire (3).

**4.** Moteur linéaire synchrone selon au moins une des revendications précédentes,
**caractérisé par le fait que**
les sous-empilages (11, 12, 13) sont essentiellement disposés en gradins, perpendiculairement à la normale de la surface d'entrefer d'une part, et perpendiculairement à la direction de l'axe longitudinal du moteur d'autre part, le nombre de sous-empilages étant $N_T$.

5. Moteur linéaire synchrone selon au moins une des revendications précédentes,
   **caractérisé par le fait que**
   les différentes tôles individuelles (30) présentent chacune la même longueur.

6. Moteur linéaire synchrone selon au moins une des revendications précédentes,
   **caractérisé par le fait que**
   les différentes tôles individuelles (30) présentent chacune la même forme.

7. Moteur linéaire synchrone selon au moins une des revendications précédentes,
   **caractérisé par le fait que**
   chaque sous-empilage (11, 12, 13) présente au moins une encoche non bobinée (34), le nombre d'encoches non bobinées (34) du sous-empilage respectif aux extrémités avant et arrière étant $N_F$.

8. Moteur linéaire synchrone selon au moins une des revendications précédentes,
   **caractérisé par le fait que**
   le nombre d'encoches non bobinées (34) du sous-empilage (11, 12, 13) respectif aux extrémités avant et arrière est $N_F = N_T - 1$, $N_T$ étant le nombre de sous-empilages (11, 12, 13).

9. Moteur linéaire synchrone selon au moins une des revendications précédentes,
   **caractérisé par le fait que**
   dans l'arrangement de gradins montants, chaque sous-empilage (11, 12, 13) succédant à un autre présente au moins une encoche non bobinée (34) de plus que le sous-empilage (11, 12, 13) précédent.

10. Moteur linéaire synchrone selon au moins une des revendications précédentes,
    **caractérisé par le fait que**
    les sous-empilages (11, 12, 13) sont décalés chaque fois d'un pas d'encoches $\tau_N$.

11. Moteur linéaire synchrone selon au moins une des revendications précédentes,
    **caractérisé par le fait que**
    les aimants sont orientables obliquement par rapport à la direction de l'axe longitudinal du moteur parallèlement à la surface d'entrefer et que l'inclinaison magnétique $\gamma$ peut être choisie différente de zéro, avec $\gamma = \dfrac{\alpha}{\tau_N}$, où $\alpha$ est le décalage des aimants en direction de l'axe longitudinal du moteur.

12. Moteur linéaire synchrone selon au moins une des revendications précédentes,
    **caractérisé par le fait que**
    le pas polaire $\tau_P$, le pas d'encoches $\tau_N$, l'inclinaison magnétique $\gamma$ et le nombre d'encoches non bobinées $N_F$ remplissent la condition : $(N_F + \gamma)\tau_N = \tau_P - \tau_N + g\tau_P$, où $g$ est un nombre entier quelconque.

13. Moteur linéaire synchrone selon au moins une des revendications précédentes,
    **caractérisé par le fait que**
    la direction des encoches est orientée d'une part perpendiculairement à la direction de l'axe longitudinal du moteur et d'autre part perpendiculairement à la normale de la surface d'entrefer.

14. Moteur linéaire synchrone selon au moins une des revendications 1 à 12,
    **caractérisé par le fait que**
    la direction des encoches est orientée perpendiculairement à la normale de la surface d'entrefer, la direction des encoches pouvant être choisie comme faisant un angle quelconque avec la direction de l'axe longitudinal du moteur et pouvant être choisie parallèle à la surface d'entrefer.

Fig. 1

Fig.2

Fig.3

EP 1 043 830 B1

Fig. 4